# EUROPÄISCHE PATENTSCHRIFT

(11) **EP 0 934 772 B1**
(45) Veröffentlichungstag und Bekanntmachung des Hinweises auf die Patenterteilung: **07.05.2003**
(21) Anmeldenummer: 99100679.2
(22) Anmeldetag: 15.01.1999
(51) Int. Cl.: B01J 8/02, B01J 19/24, C01B 3/32, C01B 3/50, B01D 53/22

(54) **Reaktor für eine katalytische chemische Reaktion, insbesondere Methanolreformierungsreaktor**
Reactor for carrying out catalytic chemical reactions, in particular a reactor for methanol reforming
Réacteur pour effectuer des réactions chimiques catalytiques et réacteur pour le reformage de méthanol en particulier

(30) Priorität: 04.02.1998 DE 19804286
(43) Veröffentlichungstag der Anmeldung: 11.08.1999
(73) Patentinhaber: DaimlerChrysler AG, 70567 Stuttgart (DE)
(72) Erfinder: Poschmann, Thomas, 89073 Ulm (DE); Wieland, Steffen, 70180 Stuttgart (DE)

(56) Entgegenhaltungen:
- FR-A- 1 417 757
- US-A- 4 329 157
- DATABASE WPI Section Ch, Week 8734 Derwent Publications Ltd., London, GB; Class E36, AN 87-239207 XP002111060 & JP 62 162601 A ((HITA) HITACHI LTD), 8. Januar 1987 (1987-01-08)
- PATENT ABSTRACTS OF JAPAN vol. 004, no. 178 (C-034), 10. Dezember 1980 (1980-12-10) & JP 55 119420 A (TOYOBO CO LTD), 13. September 1980 (1980-09-13)

## Beschreibung

Die Erfindung bezieht sich auf einen Reaktor nach dem Oberbegriff des Anspruchs 1 zur katalytischen chemischen Umsetzung eines gasförmigen oder flüssigen Reaktionsausgangsproduktes in ein Reaktionsendprodukt, das eine gasförmige oder flüssige, mittels Membrandiffusion selektiv abtrennbare Reaktionskomponente enthält.

Reaktoren, die zur katalytischen chemischen Umsetzung eines gasförmigen oder flüssigen Reaktionsausgangsproduktes in ein Reaktionsendprodukt, das eine gasförmige oder flüssige, mittels Membrandiffusion selektiv abtrennbare Reaktionskomponente enthält, geeignet sind und einen Reaktionsraum aufweisen, in den das Reaktionsausgangsprodukt einströmbar ist und der ein geeignetes Katalysatormaterial beinhaltet, sind beispielsweise zur Wasserdampfreformierung von Methanol in Gebrauch. Bei dieser Reaktion entsteht als Reaktionsendprodukt ein wasserstoffreiches Gemisch, das einen gewissen Anteil Kohlenmonoxid enthält. Es ist bekannt, solche Methanolreformierungsreaktoren in mobilen Anlagen in brennstoffzellenbetriebenen Kraftfahrzeugen einzusetzen, um den für die Brennstoffzellen benötigten Wasserstoff aus flüssig mitgeführtem Methanol zu gewinnen. Da Kohlenmonoxid einen schädigenden Einfluß auf die Brennstoffzellen hat, bedarf das Reaktionsendprodukt der Methanolreformierungsreaktion einer entsprechenden Behandlung, wofür als eine Möglichkeit die selektive Abtrennung des Wasserstoffs mittels Membrandiffusion bekannt ist. Besonders für den mobilen Einsatzfall in der Fahrzeugtechnik ist es aus Dynamik- und Platzgründen wünschenswert, den Reaktor möglichst kompakt und leicht mit wenig Bauteilen bauen zu können, wobei möglichst wenig Regelungs- und Steuereinheiten zum Einsatz kommen sollen und gleichzeitig ein hoher Wirkungsgrad angestrebt wird.

In der Patentschrift US 4.981.676 ist ein Reaktor offenbart, der zur Wasserdampfreformierung eines Kohlenwasserstoffs, insbesondere von Methan, dient und einen zylinderringförmigen Reaktionsraum beinhaltet, der mit einer geeigneten Katalysatorpelletschüttung befüllt ist. Nach außen ist der Reaktionsraum von einer metallischen, von außen beheizbaren Wand begrenzt, während die innere Begrenzung des Reaktionsraums von einem als Wasserstoffabtrennmembran wirkenden Rohr mit entsprechend poröser, keramischer Rohrwand gebildet ist. Der Durchmesser des Membranrohrs liegt typischerweise in der Größenordnung von 25mm und mehr.

In der Patentschrift EP 0 228 885 B1 ist ein Reaktor zur Zersetzung von Schwefelwasserstoff zwecks Wasserstoffgewinnung offenbart, der als sogenannter Rohrbündelreaktor aufgebaut ist, indem er ein Bündel beabstandeter Reaktionsrohre beinhaltet, die den Reaktionsraum bilden. Die Reaktionsrohre sind mit poröser Wandung derart realisiert, daß sie sowohl als selektiv wasserstoffabtrennende Membran wirken als auch ein geeignetes Katalysatormaterial enthalten. Die Wanddicke der Rohre beträgt ungefähr 1mm, und der Rohrdurchmesser beträgt ein Vielfaches davon.

Als ein spezieller Membrantyp zur selektiven Abtrennung bestimmter Komponenten aus einem Stoffgemisch mittels Membrandiffusion sind sogenannte Hohlfasern bekannt, wie sie z.B. in der Offenlegungsschrift EP 0 186 129 A2 und den Patentschriften US 4.175.153, US 5.474.680 und US 5.558.936 beschrieben sind. Diese Hohlfasern besitzen eine poröse Wandung, z.B. aus einem Keramik- oder Glasmaterial, durch die selektiv eine Komponente eines Stoffgemisches hindurchzuwandern vermag. Solche Hohlfasern werden beispielsweise zur Verwendung für die selektive Abtrennung von Wasserstoff aus einem wasserstoffhaltigen Gemisch vorgeschlagen. Die Hohlfasern besitzen typischerweise Durchmesser in der Größenordnung von einigen Hundertstel Millimetern bis wenigen Millimetern und Wandstärken in der Größenordnung von 1µm bis wenige 100µm. Speziell offenbart die genannte US 4.175.153 eine Wasserstoffabtrennstufe mit einem zylindrischen Gehäuse, in welches ein Bündel derartiger Hohlfasern voneinander beabstandet eingebracht ist. Das wasserstoffhaltige Gemisch, z.B. das Reaktionsendprodukt einer Wasserdampfreformierung von Methanol, wird stirnseitig in das Gehäuse eingeleitet und durch das Innere der parallel angeordneten Hohlfasern hindurchgeführt, wobei selektiv der Wasserstoff durch die Hohlfaserwandungen hindurchdiffundiert und dadurch von den übrigen Gemischbestandteilen abgetrennt wird. Als weitere Anwendungsmöglichkeit ist dort der Einsatz solcher wasserstoffdurchlässiger Hohlfasern als Brennstoffzellenelektrode in einer Brennstoffzelle oder in katalysatorbefüllten, wasserstofferzeugenden Reaktoren erwähnt. Ein Wasserstofferzeugungsreaktor mit mehreren, ein Katalysatorbett durchquerenden, dünnen, hohlen Diffusionsröhrchen ist in der Patentschrift AT 247 284 offenbart.

Der Erfindung liegt als technisches Problem die Bereitstellung eines Reaktors der eingangs genannten Art zugrunde, der sich relativ kompakt und leicht bauen läßt und einen hohen Umsatzwirkungsgrad erlaubt und beim Kaltstart eine rasche Erwärmung seiner Membran-Hohlfasern auf eine zur effektiven Reaktionskomponenten-Abtrennung geeignete Betriebstemperatur ermöglicht.

Die Erfindung löst dieses Problem durch die Bereitstellung eines Reaktors mit den Merkmalen des Anspruchs 1. Bei diesem Reaktor sind poröse Hohlfasern der an sich bekannten Art direkt in den Reaktionsraum eingebracht und wirken dort als Membranen zur selektiven Abtrennung der im Reaktionsendprodukt enthaltenen, selektiv abtrennbaren Komponente vom restlichen Reaktionsendprodukt. Dabei diffundiert die abzutrennende Komponente des im Reaktionsraum gebildeten Reaktionsendprodukts von außen durch die poröse Hohlfaserwandung hindurch in den inneren Kanal der jeweiligen Hohlfaser und kann über die betreffenden Hohlfaserkanäle aus dem Reaktionsraum abgezogen werden. Die abtrennenden Membranen befinden sich somit direkt an dem Ort, an welchem die katalytische chemische Umsetzung abläuft und ermöglichen eine Abtrennung der betreffenden Komponente, z.B. von Wasserstoff aus einem wasserstoffhaltigen Gemisch, mit hoher Selektivität und Ausbeute. Durch die Abtrennung dieser Komponente noch am Ort der chemischen Reaktion läßt sich das Reaktionsgleichgewicht auf die Seite dieser Komponente verschieben, deren Gewinnung erwünscht ist. Die Positionierung der Hohlfaser-Membranen im Reaktionsraum selbst kommt einem kompakten Reaktoraufbau zugute, und durch die Verwendung der Hohlfaser-Membranen kann bei gegebenem Bauvolumen eine vergleichsweise hohe Membranoberfläche zur diffusiven Abtrennung der gewünschten Komponente zur Verfügung gestellt werden. Der kompakte Reaktoraufbau mit in den Reaktionsraum integrierten Hohlfaser-Abtrennmembranen wirkt sich günstig auf die Erzielung rascher Reaktionszeiten bei schwankenden Lastbedingungen aus, was den Reaktor besonders auch für den mobilen Einsatz in Kraftfahrzeugen geeignet macht, wo häufig instationäre Betriebsphasen auftreten. Insbesondere ist der Reaktor als Methanolreformierungsreaktor zur Gewinnung von Wasserstoff durch Wasserdampfreformierung von Methanol in brennstoffzellenbetriebenen Kraftfahrzeugen verwendbar.

Die porösen Hohlfasern sind aus einem Keramik- oder Glasmaterial aufgebaut und mit einer selektivitätssteigernden metallischen Beschichtung versehen, d.h. das Metallmaterial dieser Beschichtung ist so gewählt, daß die Selektivität der Abtrennung der gewünschten Reaktionskomponente erhöht wird. Des weiteren sind Mittel zum Erwärmen der porösen Hohlfasern durch Anlegen einer elektrischen Spannung an deren metallische Beschichtung vorgesehen. Dies realisiert auf einfache Weise eine Beheizbarkeit der Hohlfasern, so daß diese beispielsweise während einer Startphase sehr rasch auf eine erhöhte, für eine effektive Abtrennfunktion erforderliche Temperatur gebracht werden können.

Bei einem nach Anspruch 2 weitergebildeten Reaktor liegt das Katalysatormaterial in einer Katalysatorschichtung vor, die durch eine Katalysatorpelletschüttung oder einen porösen Trägerkörper, in welchem das Katalysatormaterial eingebracht ist, oder einen Katalysatormetallschaumkörper, der aus dem meist metallischen Katalysatormaterial besteht, gebildet ist. Die porösen Hohlfasern erstrecken sich in paralleler Anordnung mit vorgebbarem Querabstand voneinander durch die Katalysatorschichtung hindurch.

Bei einem weitergebildeten Reaktor sind die porösen Hohlfasern aus einem Keramik- oder Glasmaterial aufgebaut und mit einer selektivitätssteigernden metallischen Beschichtung versehen, d.h. das Metallmaterial dieser Beschichtung ist so gewählt, daß die Selektivität der Abtrennung der gewünschten Reaktionskomponente erhöht wird. In weiterer Ausgestaltung dieses Reaktors sind Mittel zum Erwärmen der porösen Hohlfasern durch Anlegen einer elektrischen Spannung an deren metallische Beschichtung vorgesehen. Dies realisiert auf einfache Weise eine Beheizbarkeit der Hohlfasern, so daß diese beispielsweise während einer Startphase sehr rasch auf eine erhöhte, für eine effektive Abtrennfunktion erforderliche Temperatur gebracht werden können.

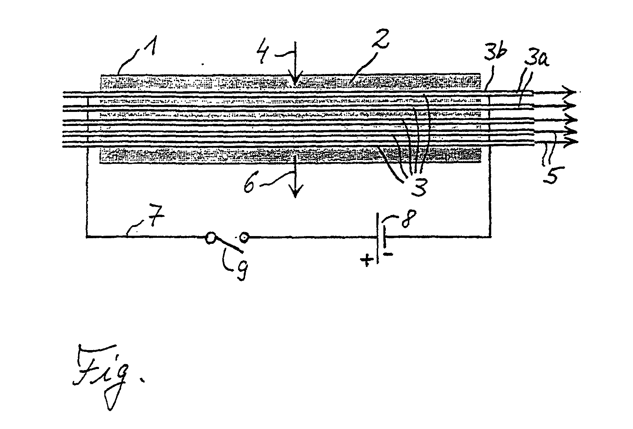

Eine vorteilhafte Ausführungsform der Erfindung ist in der Zeichnung dargestellt und wird nachfolgend beschrieben.

Die einzige Figur zeigt eine schematische Längsschnittansicht eines zum Beispiel zur Wasserdampfreformierung von Methanol einsetzbaren Reaktors.

Der in der Figur schematisch in einer Längsschnittansicht gezeigte Reaktor beinhaltet einen Reaktionsraum 1, in dessen Inneres eine Katalysatorschichtung 2 eingebracht ist. Die Katalysatorschichtung 2 enthält ein für die Durchführung der beabsichtigten katalytischen chemischen Reaktion geeignetes Katalysatormaterial, z.B. ein Cu/ZnO/Al₂O₃-Material für den Fall einer Wasserdampfreformierung von Methanol. Die Katalysatorschichtung 2 kann durch eine Katalysatorpelletschüttung oder alternativ durch einen porösen, katalysatorbelegten Trägerkörper aus Keramik, Glas, Kohlenstoff oder Kunststoff, in dessen Poren das Katalysatormaterial eingebracht ist, oder einen Metallschaumkörper mit katalytischer Wirkung gebildet sein, wobei in letzterem Fall der Metallschaumkörper ein Metall beinhaltet, das die gewünschte chemische Reaktion katalysiert.

In herkömmlicher und daher nicht näher gezeigter Weise kann in den Reaktionsraum 1 ein gasförmiges oder flüssiges Reaktionsausgangsprodukt 4 eingeleitet und dort durch eine entsprechende katalytische chemische Reaktion in ein Reaktionsendprodukt umgesetzt werden, das eine gasförmige oder flüssige, mittels Membrandiffusion abtrennbare Komponente 5 enthält. Insbesondere läßt sich der Reaktor in einem brennstoffzellenbetriebenen Kraftfahrzeug zur Gewinnung von Wasserstoff für die Brennstoffzellen mittels Wasserdampfreformierung von flüssig mitgeführtem Methanol verwenden, wobei dann das Reaktionsausgangsprodukt 4 ein bereitetes Wasserdampf/Methanol-Gemisch ist. Das Reaktionsendprodukt ist in diesem Fall ein wasserstoffreiches Gemisch, das jedoch unter anderem einen gewissen Anteil an Kohlenmonoxid enthält und daher nicht zur direkten Einspeisung in die Brennstoffzellen geeignet ist.

Charakteristischerweise sind in den Reaktionsraum als Membranen zur selektiven Abtrennung der gewünschten Reaktionskomponente 5 des durch die Reaktion im Reaktionsraum 1 gebildeten Reaktionsendproduktes Hohlfasern 3 eingebracht. Typische Durchmesser der Hohlfasern 3 liegen im Bereich zwischen einigen zehn Mikrometern bis einige Millimeter bei Wandstärken in der Größenordnung von etwa 1µm bis einige 100µm. Die Hohlfasern 3 erstrecken sich als Bündel parallel voneinander beabstandet durch den Reaktionsraum 1 hindurch und durchdringen dabei die Katalysatorschichtung 2. Sie sind von für diesen Zweck an sich bekanntem Aufbau und Zusammensetzung, wobei letztere auch abhängig von der Art der selektiv abzutrennenden Reaktionskomponente 5 gewählt ist, so daß nur diese und nicht die anderen Bestandteile des Reaktionsendproduktes von außen durch die Hohlfaserwandung hindurch in den inneren Kanal 3a der jeweiligen Hohlfaser 3 gelangen kann, von wo sie aus dem Reaktionsraum abgezogen werden kann. Im genannten Anwendungsfall der Wasserstoffgewinnung durch Wasserdampfreformierung von Methanol in brennstoffzellenbetriebenen Kraftfahrzeugen sind die Hohlfasern 3 dementsprechend selektiv wasserstoffdurchlässig ausgebildet, so daß der Wasserstoff von den restlichen Bestandteilen des Reaktionsendproduktes in hochreiner Form abgetrennt und über die Innenkanäle 3a der Hohlfasern 3 aus dem Reaktionsraum 1 abgeführt und den Brennstoffzellen zugeleitet werden kann. Das restliche Reaktionsendprodukt 6 wird in herkömmlicher, nicht näher gezeigter Weise aus dem Reaktionsraum 1 abgeführt. Wie in;der Figur schematisch gezeigt, ist die Hauptströmungsrichtung des durch den Reaktionsraum hindurchgeleiteten Reaktionsausgangsproduktes 4 senkrecht zur Längsrichtung der Hohlfasern 3 gewählt.

Wenn die Durchführung einer endothermen Reaktion beabsichtigt ist, wie dies bei der Wasserdampfreformierung von Methanol der Fall ist, ist die Einbringung der erforderlichen Wärme in die Katalysatorschichtung 2 auf eine herkömmliche, nicht gezeigte Weise vorgesehen, z.B. durch eine externe Beheizbarkeit des Reaktionsraums oder durch Bewirkung eines vorzugsweise katalytischen Verbrennungsvorgangs im Reaktionsraum 1 z.B. unter zusätzlicher Sauerstoffzufuhr, was eine exotherme partielle Oxidationsreaktion ermöglicht.

Um die Abtrennselektivität der Hohlfasern 3 bezüglich der jeweils abzutrennenden Reaktionskomponente zu erhöhen, sind die Hohlfasern 3 außenseitig, alternativ innenseitig, mit einer metallischen Schicht 3b versehen, die eine solche Wirkung besitzt, wofür sich beispielsweise Metalle der Gruppen IVb, Vb und VIII sowie deren Legierungen oder eine feinporöse Keramik daraus eignen.

Die metallische Beschichtung 3b der Hohlfasern 3 läßt sich zudem für eine rasche Aufheizung der porösen Hohlfasern 3 nutzen. Hierzu sind die metallischen Beschichtungen 3b der einzelnen Hohlfasern 3 elektrisch parallel an einen nur schematisch angedeuteten Heizstromkreis 7 angeschlossen, der eine Spannungsquelle 8 und ein ansteuerbares Schaltelement 9 zum Einund Ausschalten der Heizung beinhaltet. Die Hohlfasern 3 sind dabei mit ihrer metallischen Schicht 3b jeweils endseitig mit einem jeweiligen Pol der Heizspannungsquelle 8 verbunden, so daß bei Schließen des Schalters 9 ein Heizstrom durch die metallischen Schichten 3b fließt und dort ohmsche Wärme erzeugt. Damit können die Hohlfasern beispielsweise während einer Startphase innerhalb weniger Sekunden auf eine über der Umgebungstemperatur liegende Temperatur erwärmt werden, bei der die Diffusion der selektiv abzutrennenden Komponente, wie z.B. des Wasserstoffs eines wasserstoffreichen Reformatgasgemischs, mit ausreichender Effektivität erfolgt.

Die Steuerung der oben speziell genannten Funktionen sowie der übrigen, üblichen Reaktorfunktionen wird von einer geeigneten, nicht gezeigten Reaktorsteuereinrichtung ausgeführt, die hierzu entsprechend ausgelegt ist, wie sich dies für den Fachmann versteht.

Es versteht sich des weiteren, daß außer dem gezeigten Beispiel weitere Realisierungen des erfindungsgemäßen Reaktors möglich sind, wobei sich erfindungsgemäße Reaktoren nicht nur, wie beschrieben, zur Wasserdampfreformierung von Methanol, sondern für beliebige andere katalytische chemische Reaktionen verwenden lassen, in welchen ein gasförmiges oder flüssiges Reaktionsausgangsprodukt in einem Reaktionsraum in ein Reaktionsendprodukt umgesetzt wird, das eine gasförmige oder flüssige, mittels den porösen Membran-Hohlfasern selektiv abtrennbare Reaktionskomponente enthält. Dabei sind beliebige Bauformen für den Reaktionsraum möglich, in welchen die Hohlfasern in geeigneter Anzahl und Anordnung eingebracht sind.

## Patentansprüche

1. Reaktor zur katalytischen chemischen Umsetzung eines gasförmigen oder flüssigen Reaktionsausgangsproduktes (4) in ein Reaktionsendprodukt, das eine gasförmige oder flüssige, mittels Membrandiffusion selektiv abtrennbare Reaktionskomponente (5) enthält, insbesondere zur Wasserdampfreformierung von Methanol, mit
- einem Reaktionsraum (1) in den das Reaktionsausgangsprodukt einströmbar ist und der ein geeignetes Katalysatormaterial beinhaltet und in den poröse Hohlfasern (3) als Membranen zur selektiven Abtrennung der Reaktionskomponente (5) vom restlichen Reaktionsendprodukt (6) eingebracht sind,
**dadurch gekennzeichnet, daß**
- die porösen Hohlfasern (3) aus einem Keramik- oder Glasmaterial bestehen und mit einer abtrennselektivitätssteigernden metallischen Beschichtung (3b) versehen sind und
- Mittel (7, 8, 9) zum Erwärmen der porösen Hohlfasern (3) durch Anlegen einer elektrischen Spannung an deren metallische Beschichtung (3b) vorgesehen sind.

2. Reaktor nach Anspruch 1, weiter
**dadurch gekennzeichnet, daß**
das Katalysatormaterial in einer Katalysatorschichtung (2) vorliegt, die durch eine Katalysatorpelletschüttung oder einen porösen, katalysatorbelegten Trägerkörper oder einen katalytischen Metallschaumkörper gebildet ist und durch die hindurch sich die porösen Hohlfasern (3) voneinander beabstandet erstrecken.

## Claims

1. Reactor for the catalytic chemical conversion of a gaseous or liquid reaction starting material (4) into a reaction end product which contains a gaseous or liquid reaction component (5) which can be separated out selectively by means of membrane diffusion, in particular for the steam reforming of methanol, having
- a reaction chamber (1) into which the reaction starting material can flow, which contains a suitable catalyst material and into which porous hollow fibres (3) are introduced as membranes for selectively separating the reaction component (5) from the remainder of the reaction end product (6),
**characterized in that**
- the porous hollow fibres (3) consist of a ceramic or glass material and are provided with a metallic coating (3b) which increases the selectivity of separation, and
- means (7, 8, 9) for heating the porous hollow fibres (3) by applying an electric voltage to their metallic coating (3b) are provided.

2. Reactor according to Claim 1, also **characterized in that** the catalyst material is present in a layered catalyst arrangement (2) which is formed by a bed of catalyst pellets or a porous, catalyst-covered support body or a catalytic foamed metal body and through which the porous hollow fibres (3) extend at a distance from one another.

## Revendications

1. Réacteur pour la conversion chimique catalysée d'un réactif de départ (4) gazeux ou liquide en un produit final de réaction qui contient un composant de réaction (5) gazeux ou liquide apte à être séparé sélectivement par diffusion à travers une membrane, en particulier pour le reformage de méthanol à partir de vapeur d'eau, comprenant :
- une chambre de réaction (1) dans laquelle le réactif de départ peut être injecté et qui contient un matériau catalyseur approprié, et dans laquelle des fibres creuses poreuses (3) sont installées en tant que membranes de séparation sélective du composant de réaction (5) par rapport au reste du produit final de réaction (6),
**caractérisé en ce que**
- les fibres creuses poreuses (3) sont constituées d'un matériau de céramique ou de verre et sont dotées d'un revêtement métallique (3b) qui renforce la sélectivité de la séparation, et
- des moyens (7, 8, 9) pour le chauffage des fibres creuses poreuses (3) par application d'une tension électrique sur leur revêtement métallique (3b) sont prévus.

2. Réacteur selon la revendication 1, **caractérisé en ce que** le matériau catalyseur se présente sous la forme d'une couche de catalyseur (2) formée par des pastilles de catalyseur en vrac, un corps porteur poreux occupé par le catalyseur ou un corps catalytique en mousse métallique, les fibres creuses poreuses (3) s'étendant à distance les unes des autres dans le matériau catalyseur.
